# EUROPÄISCHE PATENTSCHRIFT

(11) **EP 1 010 520 B1**
(45) Veröffentlichungstag und Bekanntmachung des Hinweises auf die Patenterteilung: **28.07.2004**
(21) Anmeldenummer: 99123146.5
(22) Anmeldetag: 19.11.1999
(51) Int. Cl.: B32B 33/00, B29C 45/14, E04F 13/08, E04F 15/02

(54) **Verwendung von Schichtverbundmaterial auf der Basis von thermoplastischen Polymeren**
Use of multilayer structures based on thermoplastic polymers
Utilisation de structures multicouches à base de polymères thermoplastiques

(30) Priorität: 16.12.1998 DE 19858173
(43) Veröffentlichungstag der Anmeldung: 21.06.2000
(73) Patentinhaber: Basell Polyolefine GmbH, 50389 Wesseling (DE)
(72) Erfinder: Müller, Klaus, 65843 Sulzbach (DE); Klemm, Klaus, 97656 Oberelsbach (DE)
(74) Vertreter: Hoffmann, Peter

(56) Entgegenhaltungen:
- DE-A- 1 629 641
- DE-A- 1 629 691
- DE-A- 19 722 339
- FR-A- 2 673 575

## Beschreibung

Die Erfindung bezieht sich auf die Verwendung von Schichtverbundmaterial mit dekorativ ausgestalteter Oberfläche, bestehend aus einer Trägerschicht aus einem thermoplastischen Polymeren, welches nicht Polypropylen ist, beidseitig darauf angeordneten Dekorschichten und auf den Dekorschichten aufgebrachten hitzegehärteten Schichten.

Schichtverbundmaterialien allgemeiner Art sind bekannt und bestehen im wesentlichen aus einem Kernmaterial aus Holz oder zumindest holzähnlichem Material wie Holzfasermaterial oder unter Harzzusatz verpreßten Einzelpapieren, auf das unter Einwirkung von Hitze und Druck Dekormaterialien wie Holz- oder Marmormaserungen in Kombination mit vernetzbaren Harzmaterialien (Overlays) aufgebracht werden. Derartige Materialien sind z.B. in dem Firmenprospekt Euwid beschrieben.

Die bekannten Materialien haben allerdings den Nachteil, daß sie eine gewisse Empfindlichkeit gegenüber von den Rändern her in die Kernschicht eindringender Feuchtigkeit aufweisen, weil das Holz oder das holzähnliche Material unter dem Einfluß von Feuchtigkeit zum Auf quellen neigt. Darüber hinaus ist das Verpressen der Verbundmaterialien ein in bezug auf die dafür notwendige Energie und die Kosten aufwendiges Verfahren, weil das Verpressen bei Temperaturen im Bereich von 140 bis 180 °C und Drücken von bis zu 200 N/cm² durchgeführt werden muß, woran sich dann zusätzlich noch eine mehrtägige Nachpreßbehandlung anschließt, damit ein Plattenverzug ausgeschlossen und eine optimal geschlossene Oberfläche realisiert wird.

Für zahlreiche industrielle Anwendungen, beispielsweise in der Automobil- oder Elektroindustrie, benötigt man als Oberflächenmaterialien Werkstoffe, die einerseits eine hohe Kratzfestigkeit und andererseits eine relativ hohe Temperaturbeständigkeit aufweisen sollten und sich darüber hinaus gut dekorativ ausgestalten lassen sollten.

In der Möbelherstellung werden schon seit längerem Oberflächenmaterialien eingesetzt, wobei mehrere Schichten, u.a. eine Trägerschicht, eine Dekorschicht und eine darauf aufliegende hitzegehärtete Schicht, mit Hilfe von weiteren Verbundschichten, beispielsweise aus Papier oder aus Klebefolien, ein dekoratives Schichtverbundmaterial ergeben. Ein derartiges Schichtverbundmaterial ist jedoch sehr aufwendig herzustellen, weist oft einen hohen Formaldehydanteil auf und zeigt ein ungünstiges Quellverhalten.

Aus der älteren Anmeldung DE-A 1 97 22 339 ist ein Schichtverbundmaterial bekannt, welches eine Trägerschicht aus Polypropylen, eine darauf angeordnete Dekorschicht und eine auf der Dekorschicht aufgebrachte hitzegehärtete Schicht enthält. Für einige Anwendungszwecke benötigt man jedoch ein Schichtverbundmaterial, welches anstelle einer Trägerschicht aus Polypropylen eine Trägerschicht aus einem anderen thermoplastischen Polymeren aufweist und damit über etwas veränderte mechanische Eigenschaften verfügt.

Es bestand daher die Aufgabe, eine neue Verwendung für ein Schichtverbundmaterial aus einem thermoplastischen Polymeren mit dekorativen Oberflächen zu finden, das gegen Feuchtigkeit und andere ähnliche Umwelteinflüsse wie Zigarettenglut oder Chemikalien unempfindlich ist, das eine verbesserte Abriebfestigkeit und eine hohe Druckfestigkeit besitzt und das sich auf einfache Art kostengünstig herstellen lässt.

Gelöst wird diese Aufgabe durch die Verwendung von Schichtverbundmaterial mit dekorativ ausgestalteter Oberfläche, bestehend aus einer Trägerschicht aus einem thermoplastischen Polymeren, beidseitig darauf angeordneten Dekorschichten und auf den Dekorschichten angeordneten hitzegehärteten Schichten, für den Automobilbau und die Elektromdustrie, wobei kennzeichender Weise als thermoplastisches Polymer Polystyrol, Styrol-Acrylnitril-Copolymer, Acrylnitril-Butadien-Styrol-Copolymer, Polybutylenterephthalat oder Polyoxymethylen verwendet wird.

Das Schichtverbundmaterial ist erfindungsgemäß auf beiden Seiten der Trägerschicht aus dem thermoplastischen Polymeren, welches nicht Polypropylen ist, mit Dekorschichten und auf den Dekorschichten mit hitzegehärteten Schichten überzogen, wodurch eine sandwichartige Struktur mit der Trägerschicht in der Mitte entsteht.

Das Material der Trägerschicht enthält 0 bis 60, vorzugsweise 0 bis 50, besonders bevorzugt 0 bis 40 Gew.-%, bezogen auf das Gesamtgewicht der Mischung, an verstärkenden Füllstoffen, wie zum Beispiel Bariumsulfat, Magnesiumhydroxyd, Talkum mit einer mittleren Korngröße im Bereich von 0,1 bis 10 µm, gemessen nach DIN 66 115, Holz, Flachs, Kreide, Glasfasern, beschichteten Glasfasern, Lang- oder Kurzglasfasern, Glaskugeln oder Mischungen von diesen. Außerdem kann das Material der Trägerschicht noch die üblichen Zusatzstoffe wie Licht-, UV- und Wärmestabilisatoren, Pigmente, Ruße, Gleitmittel, Flammschutzmittel, Treibmittel und dergleichen in den üblichen und erforderlichen Mengen erhalten.

Als thermoplastische Polymere, die die Trägerschicht bilden und die nicht Polypropylen sind, kommen Polyoxymethylen, Polybutylenterephthalat oder aus Polystyrol, insbesondere aus Copolymeren des Styrols mit untergeordneten Anteilen an einem oder mehreren Comonomeren wie zum Beispiel Butadien, α-Methyl-styrol, Acrylnitril, zu Verwendung. Die Trägerschicht des erfindungsgemäßen Schichtverbundmaterials kann auch Rezyklate aus diesen thermoplastischen Polymeren enthalten.

Unter der Bezeichnung Polyoxymethylen sollen dabei Homo- und Copolymere von Aldehyden, beispielsweise von Formaldehyd, und von cyclischen Acetalen verstanden werden, die wiederkehrende Kohlenstoff-Sauerstoff-Bindungen im Molekül enthalten und einen Schmelzflußindex, nach ISO 1133 bei 230°C und unter einem Gewicht von 2,16 kg, von 5 bis 40 g/10 min., insbesondere von 5 bis 30 g/10 min. aufweisen.

Das bevorzugt verwendete Polybutylenterephthalat ist ein höhermolekulares Veresterungsprodukt von Terephthalsäure mit Butylenglykol und einem Schmelzflußindex, nach ISO 1133, bei 230°C und unter einem Gewicht von 2,16 kg, von 5 bis 45 g/10 min., insbesondere von 5 bis 30 g/10 min.

Als Copolymere des Styrols kommen insbesondere Copolymere mit bis zu 45 Gew.-%, vorzugsweise mit bis zu 20 Gew.-% an einpolymerisiertem Acrylnitril in Betracht. Derartige Copolymere aus Styrol und Acrylnitril (SAN) weisen einen Schmelzflußindex, nach ISO 1133, bei 230°C und unter einem Gewicht von 2,16 kg, von 1 bis 25 g/10 min., insbesondere von 4 bis 20 g/10 min. auf.

Weitere ebenfalls bevorzugt eingesetzte Copolymere des Styrols enthalten bis zu 35 Gew.-%, insbesondere bis zu 20 Gew.-% einpolymerisiertes Acrylnitril und bis zu 35 Gew.-%, insbesondere bis zu 30 Gew.-% einpolymerisiertes Butadien. Der Schmelzeflußindex derartiger Copolymere aus Styrol, Acrylnitril und Butadien (ABS), nach ISO 1133, bei 230°C und unter einem Gewicht von 2,16 kg, liegt im Bereich von 1 bis 40 g/10 min., insbesondere im Bereich von 2 bis 30 g/10 min.

Als Trägerschicht können im verwendeten Schichtverbundmaterial auch Blends, d.h. Mischungen unterschiedlicher thermoplastischer Polymerer verwendet werden, beispielsweise Blends aus einem Copolymeren des Styrols mit Acrylnitril und einem Copolymeren aus Butadien und Acrylnitril.

Es kann sich ferner empfehlen, zwischen die Trägerschicht und die Dekorschicht noch eine Zwischenlage als Verbundmaterial einzubringen, die für eine möglichst gute Verbindung von Träger- und Dekorschicht sorgt. Als Zwischenlage kann u.a. getränktes Papier, ein Vlies oder ein Haftvermittler, ein Primer oder aber ein Klebematerial verwendet werden. Bevorzugt wird als Zwischenlage ein getränktes Papier oder aber ein Vlies eingesetzt.

Die Dekorschicht kann aus einem Kunststoffmaterial bestehen, das eine Prägung oder eine Färbung oder beides in Kombination aufweist, beispielsweise in Form eines Fertiglaminates. Die Dekorschicht kann aber auch aus Papier oder aus einem Gewebe oder einem papierähnlichen oder gewebeähnlichen oder holzähnlichen oder metallähnlichen Material aufgebaut sein. Beispiele hierfür wären Dekorschichten aus einem aluminiumartigen Material oder aus einem edelstahlartigen Material oder aber aus holz-, kork- oder linoleumartigen Material.

Die auf der Dekorschicht angeordnete hitzegehärtete Schicht (Overlay) besteht aus einem duroplastischen Kunststoffmaterial, beispielsweise aus einem mit Melaminharz oder Harnstoffharz getränktem Papier, das durch Druck- oder Hitzeeinwirkung während der Herstellung des Schichtverbundmaterials vernetzt wird. Derartige Materialien sind als solche bekannt und u.a. als Fertiglaminat bei Firma Melaplast in Schweinfurt, Deutschland, erhältlich.

Die Schichtkombination aus Dekorschicht plus Overlay (Imprägnat) ist erfindungsgemäß beidseitig auf der Trägerschicht bzw. auf der Zwischenlage angeordnet. Es ist auch möglich, ein Fertiglaminat auf die Trägerschicht bzw. auf die Zwischenlage aufzubringen, welches aus der Dekorschicht und aus dem Overlay besteht.

Die Gesamtdicke des verwendeten Schichtverbundmaterials liegt im Bereich von 1 mm bis 20 mm, vorzugsweise im Bereich von 5 mm bis 10 mm, wobei auf die Trägerschicht wenigstens 80 %, vorzugsweise wenigstens 90 %, der Gesamtdicke entfallen.

Zur Herstellung des verwendeten Schichtverbundmaterials werden die Materialien für die Dekorschicht und das Overlay sowie gegebenenfalls für die Zwischenlage, die beide in Form dünner flexibler Folien, sogenannter lmprägnate, oder auch als Fertiglaminate vorgelegt werden, mit dem Material für die Trägerschicht hinterspritzt. Dazu wird das verstärkte thermoplastische Polymere in einem Extruder auf eine Temperatur von wenigstens 180°C, vorzugsweise von wenigstens 200°C, erhitzt und dann unter einem Druck von wenigstens 80 N/cm², vorzugsweise von wenigstens 90 N/cm², in die Spritzgußkammer einer Spritzgießmaschine gebracht, in die vorher die Folien für die Dekorschicht und hitzegehärtete Schicht, sowie gegebenenfalls für die Zwischenlage oder das Fertiglaminat eingelegt worden waren. Unter Beibehaltung eines Nachdrucks von wenigstens 10 N/cm², vorzugsweise von wenigstens 50 N/cm², wird dann das Werkzeug innerhalb einer Zeit von maximal 4 min, vozugsweise von maximal 3 min, auf eine Temperatur von nicht weniger als 60 °C, vorzugsweise von nicht weniger als 70 °C, abgekühlt und dann das Formteil aus der Spritzgußkammer entnommen.

Überraschend zeigt sich, daß das Schichtverbundmaterial eine hervorragende Haftung der einzelnen Schichten untereinander aufweist, wenn die obengenannten Verfahrensbedingungen bei der Herstellung des verwendeten Schichtverbundmaterials eingehalten werden. Um die Haftung der Schichten untereinander noch weiter zu verbessern, kann es vorteilhaft sein, wenn das Overlay vor dem Einlegen in die Spritzgußkammer einer Flammbehandlung bei einer Temperatur im Bereich von 50 bis 80 °C unterzogen wird, die vorzugsweise beidseitig durchgeführt wird.

Das vorstehend beschriebene Schichtverbundmaterial eignet sich überraschend gut zur Herstellung von allen Formteilen, bei denen eine dekorative Oberfläche mit besonderer Resistenz gegen chemische, mechanische oder thermische Beschädigungen kombiniert sein soll.

Die Schichtverbundmaterialien eignen sich vor allem als Oberflächenmaterialien für den Automobilbau und die Elektroindustrie.

In den nachfolgenden Beispielen soll die Erfindung noch näher erläutert werden. Im Rahmen der Ausführungsbeispiele wurden folgende Meßmethoden angewandt:
- Das Verhalten gegenüber Wasserdampf wurde nach EN 438-2.24 bestimmt;
- die Abriebfestigkeit wurde nach EN 438-2.6 bei 6000 bis 10 000 U/min bestimmt;
- die Druckfestigkeit wurde durch Kugelfalltest nach EN 438 bei einer 8 mm Trägerplatte, Abdruckgröße: 5,5 mm, bestimmt;
- die Resistenz gegen Zigarettenglut wurde nach EN 438-2.18 bestimmt;
- die Chemikalienbeständigkeit wurde nach DIN 51958 bestimmt;
- die Kratzfestigkeit wurde nach ISO 1518 bestimmt;
- die Haftfestigkeit wurde bestimmt, indem mit einem Rasiermesser kreuzförmig parallele Schnitte (Gitterschnitte) in die Oberfläche eines Formteils eingebracht wurden. Dann wurde ein Klebeband auf die mit den Schnitten versehende Oberfläche aufgepreßt und danach wurde das Klebeband im rechten Winkel kräftig von der Oberfläche abgezogen. Wenn mit dem Klebeband praktisch keine Segmente von der Oberfläche entfernt werden konnten, wurde die Haftfestigkeit mit "+"' bezeichnet, wenn sich einzelne Segmente in einer Menge von bis zu 10 % der Gesamtbelegung abziehen ließen, wurde das Ergebnis mit "±" bezeichnet, und wenn mehr als 10 % der gesamten Oberfläche abgezogen werden konnte wurde das Ergebnis mit "-" bezeichnet. Besonders gute Haftfestigkeiten wurden mit "++" bewertet.

### Beispiel 1

Ein talkumverstärktes Copolymeres des Styrols mit 15 Gew.-% einpolymerisiertem Acrylnitril und mit einem Talkumgehalt von 30 Gew.- %, bezogen auf das Gesamtgewicht der Formmasse, wurde auf eine Temperatur von 280 °C erhitzt und unter einem Spritzdruck von 110 N/cm² in eine flache Spritzgußkammer eingespritzt, in die vorher ein Fertiglaminat aus einem Overlay und einer Dekorfolie aus der Firma Melaplast auswerfseitig eingelegt worden war. Unter Aufrechterhaltung eines Nachdrucks von 50 N/cm² wurde das Werkzeug innerhalb einer Zeitdauer von 2 min auf eine Temperatur von 80°C abgekühlt, dann wurde die Spritzgußkammer geöffnet und das entstandene Formteil entnommen. Die Ergebnisse der Messungen an dem einseitig hinterspritzten Formteil sind in Tabelle 1 angegeben.

### Beispiel 2

Ein langglasfaserverstärktes Copolymeres des Styrols mit 15 Gew.-% einpolymerisiertem Acrylnitril und mit einem Gehalt an Langglasfasern von 30 Gew.-%, bezogen auf das Gesamtgewicht der Formmasse, wurde auf eine Massetemperatur von 290°C erhitzt und unter einem Spritzdruck von 110 N/cm² in eine flache Spritzkammer eingespritzt, in der vorher das gleiche Fertiglaminat wie im Beispiel 1 eingesetzt, auswerferseitig eingelegt worden war. Unter Aufrechterhaltung eines Nachdruckes von 50 N/cm² wurde das Werkzeug innerhalb einer Zeitdauer von 2,0 min. auf eine Temperatur von 80°C abgekühlt, dann wurde die Spritzgußkammer geöffnet und das entstandene einseitig hinterspritzte Formteil entnommen. Die Ergebnisse der Messungen an dem Formteil sind in Tabelle 1 angegeben.

### Beispiel 3

Ein glaskugel- und langglasfaserverstärktes Copolymeres des Styrols mit 15 Gew.-% einpolymerisiertem Acrylnitril und mit einem Gehalt an Glaskugeln von 10 Gew.-% und an Langglasfasern von 20 Gew. -%, bezogen auf das Gesamtgewicht der Formmasse, wurde auf eine Massetemperatur von 290°C erhitzt und unter einem Spritzdruck von 110 N/cm² in eine flache Spritzkammer eingespritzt, in dem vorher das gleiche Fertiglaminat wie im Beispiel 1 eingesetzt, auswerferseitig eingelegt worden war. Unter Aufrechterhaltung eines Nachdruckes von 50 N/cm² wurde das Werkzeug innerhalb einer Zeitdauer von 2,0 min. auf eine Temperatur von 80°C abgekühlt, dann wurde die Spritzkammer geöffnet und das entstandene einseitig hinterspritzte Formteil entnommen. Die Ergebnisse der Messungen an dem Formteil sind in Tabelle 1 angegeben.

### Beispiel 4

Ein unverstärktes Copolymeres des Styrols mit 15 Gew.-% einpolymerisiertem Acrylnitril wurde auf eine Massetemperatur von 270°C erhitzt und unter einem Spritzdruck von 100 N/cm² in eine flache Spritzkammer eingespritzt, indem vorher das gleiche Fertiglaminat wie in Beispiel 1 auswerferseitig eingelegt worden war. Unter Aufrechterhaltung eines Nachdruckes von 50 N/cm² wurde das Werkzeug innerhalb einer Zeitdauer von 2,0 min. auf eine Temperatur von 80°C abgekühlt, dann wurde die Spritzkammer geöffnet und das entstandene einseitig hinterspritzte Formteil entnommen. Die Ergebnisse der Messungen an dem Formteil sind in Tabelle 1 angegeben.

### Vergleichsbeispiel A

Das Beispiel 1 wurde analog wiederholt, wobei aber anstelle eines verstärkten Copolymeren des Styrols mit einpolymerisiertem Acrylnitril als Trägerschicht jetzt eine Trägerschicht aus Holzfasern verwendet wurde. Die Ergebnisse der durchgeführten Messungen sind in der Tabelle 1 abgegeben.

### Beispiel 5

Ein langglasfaserverstärktes Copolymeres des Styrols mit 15 Gew.-% einpolymerisiertem Acrylnitril und mit 10 Gew.-% einpolymerisiertem Butadien (ABS) und mit einem Gehalt an Langglasfasern von 30 Gew.-%, bezogen auf das Gesamtgewicht der Formmasse, wurde auf eine Massetemperatur von 290°C erhitzt und unter einem Spritzdruck von 110 N/cm² in eine flache Spritzkammer eingespritzt, in der vorher das gleiche Fertiglaminat wie in Beispiel 1 eingesetzt, auswerferseitig eingelegt worden war. Unter Aufrechterhaltung eines Nachdruckes von 60 N/cm² wurde das Werkzeug innerhalb einer Zeitdauer von 2,0 min. auf eine Temperatur von 85°C abgekühlt, dann wurde die Spritzgußkammer geöffnet und das entstandene einseitig hinterspritzte Formteil entnommen. Die Ergebnisse der Messungen an dem Formteil sind in Tabelle 2 angegeben.

### Beispiel 6

Ein unverstärktes Copolymeres des Styrols mit 15 Gew.-% einpolymerisiertem Acrylnitril und mit 10 Gew.-% einpolymerisiertem Butadien (ABS) wurde auf eine Massetemperatur von 270°C erhitzt und unter einem Spritzdruck von 100 N/cm² in eine flache Spritzkammer eingespritzt, in dem vorher das gleiche Fertiglaminat wie in Beispiel 1 eingesetzt, auswerferseitig eingelegt worden war. Unter Aufrechterhaltung eines Nachdruckes von 60 N/cm² wurde das Werkzeug innerhalb einer Zeitdauer von 2,0 min. auf eine Temperatur von 70°C abgekühlt, dann wurde die Spritzkammer geöffnet und das entstandene einseitig hinterspritzte Formteil entnommen. Die Ergebnisse der Messungen an dem Formteil sind in Tabelle 2 angegeben.

### Vergleichsbeispiel B

Das Beispiel 5 wurde analog wiederholt, wobei aber anstelle eines verstärkten Copolymeren des Styrols mit einpolymerisiertem Acrylnitril und Butadien (ABS) als Trägerschicht jetzt eine Trägerschicht aus Holzfasern verwendet wurde. Die Ergebnisse der durchgeführten Messungen sind in der Tabelle 2 angegeben.

### Beispiel 7

Ein langfaserverstärktes Polybutylenterephthalat mit einem Gehalt an Langglasfasern von 30 Gew.-%, bezogen auf das Gesamtgewicht der Formmasse, wurde auf eine Massetemperatur von 300°C erhitzt und unter einem Spritzdruck von 100 N/cm² in eine flache Spritzkammer eingespritzt, in der vorher das gleiche Fertiglaminat wie in Beispiel 1 eingesetzt, auswerferseitig eingelegt worden war. Unter Aufrechterhaltung eines Nachdruckes von 50 N/cm² wurde das Werkzeug innerhalb einer Zeitdauer von 1,0 min. auf eine Temperatur von 100°C abgekühlt, dann wurde die Spritzkammer geöffnet und das entstandene einseitig hinterspritzte Formteil entnommen. Die Ergebnisse der Messungen an dem Formteil sind in Tabelle 3 angegeben.

### Beispiel 8

Ein unverstärktes Polybutylenterephthalat wurde auf eine Massetemperatur von 300°C erhitzt und unter einem Spritzdruck von 100 N/cm² in eine flache Spritzkammer eingespritzt, in der vorher das gleiche Fertiglaminat wie in Beispiel 1 eingesetzt, auswerferseitig eingelegt worden war. Unter Aufrechterhaltung eines Nachdruckes von 50 N/cm² wurde das Werkzeug innerhalb einer Zeitdauer von 1,0 min. auf eine Temperatur von 90°C abgekühlt, dann wurde die Spritzkammer geöffnet und das entstandene einseitig hinterspritzte Formteil entnommen. Die Ergebnisse der Messungen an dem Formteil sind in Tabelle 3 angegeben.

### Vergleichsbeispiel C

Das Beispiel 7 wurde analog wiederholt, wobei aber anstelle eines verstärkten Polybutylenterephthalats als Trägerschicht jetzt eine Trägerschicht aus Holzfasern verwendet wurde. Die Ergebnisse der durchgeführten Messungen sind in der Tabelle 3 angegeben.

### Beispiel 9

Ein langfaserverstärktes Polyoxymethylen mit einem Gehalt an Langglasfaser von 30 Gew.-%, bezogen auf das Gesamtgewicht der Formmasse, wurde auf eine Massetemperatur von 200°C erhitzt und unter einem Spritzdruck von 100 N/cm² in eine flache Spritzkammer eingespritzt, in der vorher das gleiche Fertiglaminat wie in Beispiel 1 eingesetzt, auswerferseitig eingelegt worden war. Unter Aufrechterhaltung eines Nachdruckes von 50 N/cm² wurde das Werkzeug innerhalb einer Zeitdauer von 1,0 min. auf eine Temperatur von 80°C abgekühlt, dann wurde die Spritzkammer geöffnet und das entstandene einseitig hinterspritzte Formteil entnommen. Die Ergebnisse der Messungen an dem Formteil sind in Tabelle 4 angegeben.

### Beispiel 10

Ein unverstärktes Polyoxymethylen wurde auf eine Massetemperatur von 200°C erhitzt und unter einem Spritzdruck von 100 N/cm² in eine flache Spritzkammer eingespritzt, in der vorher das gleiche Fertiglaminat wie in Beispiel 1 eingesetzt, auswerferseitig eingelegt worden war. Unter Aufrechterhaltung eines Nachdruckes von 50 N/cm² wurde das Werkzeug innerhalb einer Zeitdauer von 1,0 min. auf eine Temperatur von 70°C abgekühlt, dann wurde die Spritzkammer geöffnet und das entstandene einseitig hinterspritzte Formteil entnommen. Die Ergebnisse der Messungen an dem Formteil sind in Tabelle 4 angegeben.

### Vergleichsbeispiel D

Das Beispiel 9 wurde analog wiederholt, wobei aber anstelle eines verstärkten Polyoxymethylens als Trägerschicht jetzt eine Trägerschicht aus Holzfasern verwendet wurde. Die Ergebnisse der durchgeführten Messungen sind in der nachfolgenden Tabelle 4 angegeben.

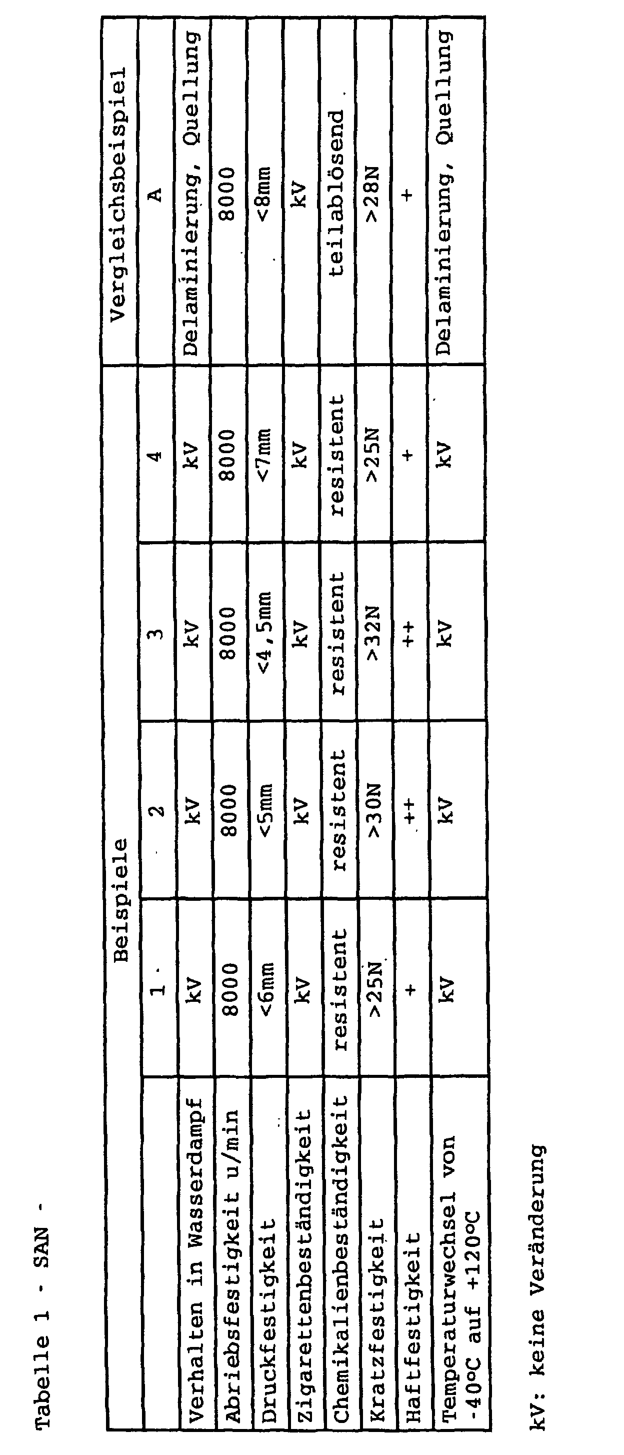

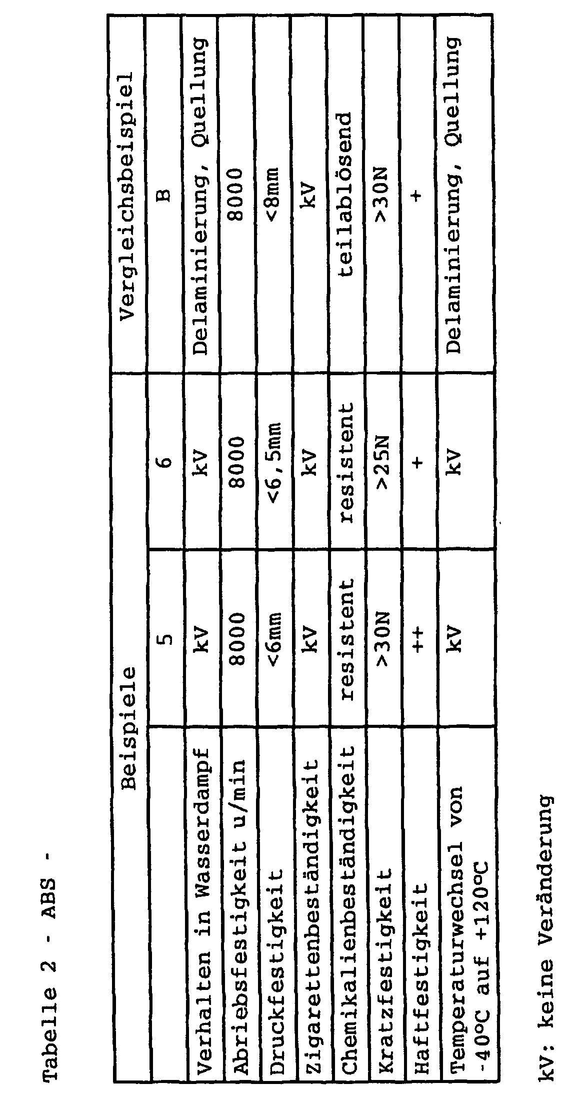

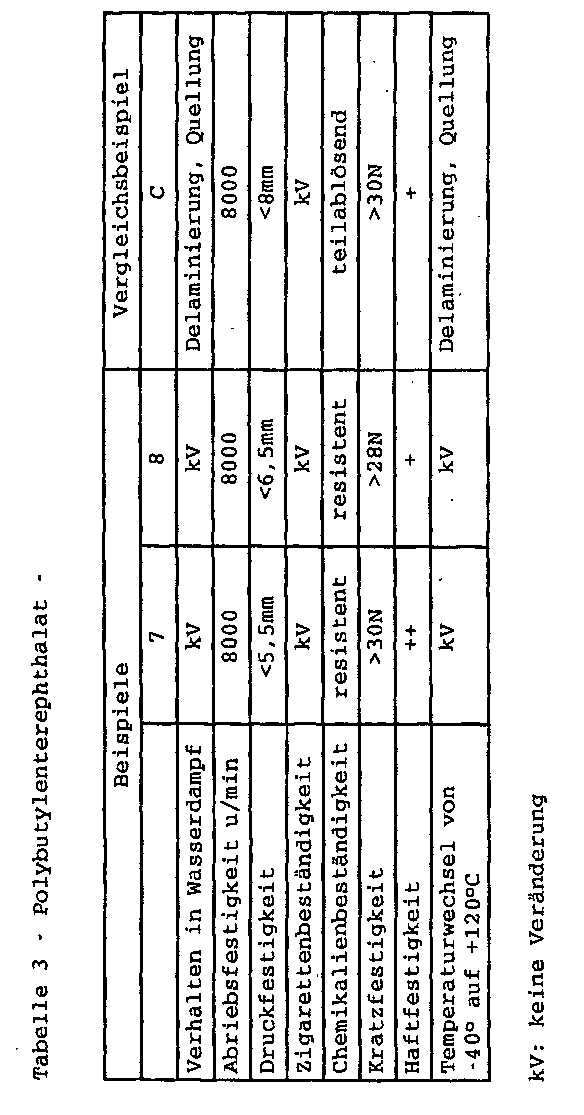

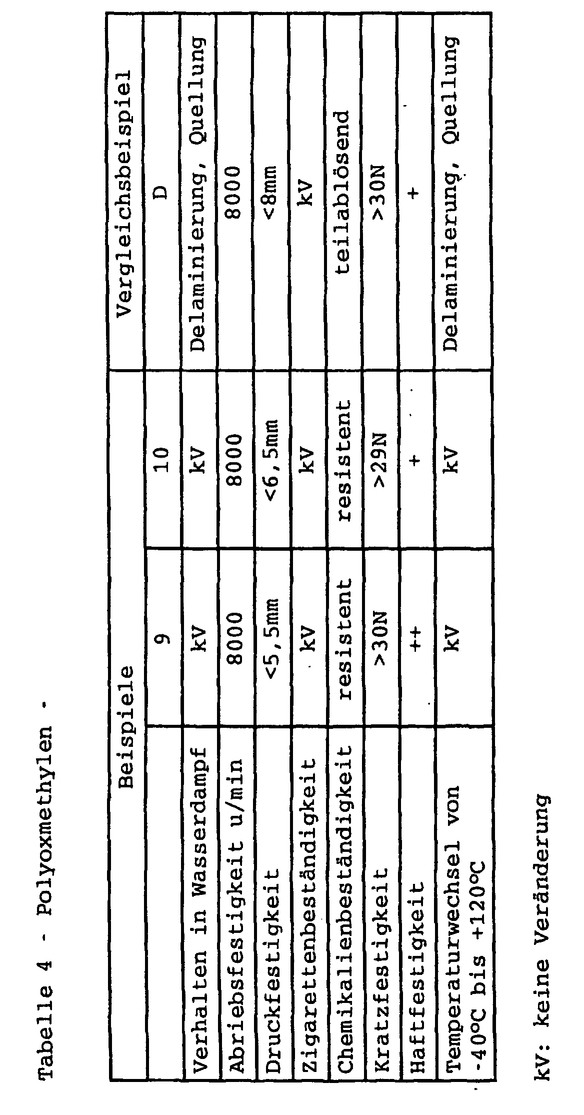

Aus den Tabellen 1 bis 4 ergibt sich, daß die Schichtverbundmaterialien, welche als Trägerschicht alle ein thermoplastisches Polymeres enthalten (Beispiel 1 bis 10) über eine größere Resistenz gegenüber Wasserdampf und Zigarettenglut sowie eine höhere Temperatur- und Chemikalienbeständigkeit aufweisen als die Schichtverbundmaterialien der Vergleichsbeispiele A bis D, welche als Trägerschichten Holzfasern enthalten. Darüber hinaus verfügen die Schichtverbundmaterialien über eine größere mechanische Stabilität, insbesondere eine höhere Abriebfestigkeit, Druckfestigkeit, Kratzfestigkeit und Haftfestigkeit als die Schichtverbundmaterialien der Vergleichsbeispiele A bis D.

## Patentansprüche

1. Verwendung von Schichtverbundmaterial mit dekorativ ausgestalteter Oberfläche, das aus einer Dekorschicht und einer auf der Dekorschicht aufgebrachten hitzegehärteten Schicht besteht, die auf beiden Seiten einer Trägerschicht aus thermoplastischem Polymer angeordnet sind, als Oberflächenmaterial für den Automobilbau und die Elektroindustrie, **dadurch gekennzeichnet, dass** als thermoplastisches Polymer Polystyrol, Styrol-Acrylnitril-Copolymer, Acrylnitril-Butadien-Styrol-Copolymer, Polybutylenterephthalat oder Polyoxymethylen verwendet wird.

2. Verwendung nach Anspruch 1, **dadurch gekennzeichnet, dass** für die Trägerschicht zusätzlich Verstärkungsmaterial in einer Menge von 10 bis 60 Gew.-% verwendet wird, bezogen auf das Gesamtgewicht der Mischung, wobei das Verstärkungsmaterial aus Bariumsulfat, Magnesiumhydroxyd, Zalkum, Holz, Flachs, Kreide, Glasfasern oder Glaskugeln besteht.

3. Verwendung nach einem der Ansprüche 1 oder 2, **dadurch gekennzeichnet, dass** ein Schichtverbundmaterial verwendet wird, das eine Gesamtdicke im Bereich von 1 bis 20 mm besitzt und bei dem 80 % der Gesamtdicke auf die Trägerschicht entfallen.

## Claims

1. Use of layered composite material which has a decoratively designed surface and which is composed of a decorative layer and of a heat-cured layer applied to the decorative layer, these having been arranged on the two sides of a backing layer composed of thermoplastic polymer, as a surface material for automotive construction and the electrical industry, wherein the thermoplastic polymer used comprises polystyrene, styreneacrylonitrile copolymer, acrylonitrile-butadiene-styrene copolymer, polybutylene terephthalate, or polyoxymethylene.

2. Use according to claim 1, wherein, for the backing layer, use is also made of from 10 to 60% by weight, based on the total weight of the mixture, of reinforcing material, where the reinforcing material is composed of barium sulfate, magnesium hydroxide, talc, wood, flax, chalk, glass fibers, or glass beads.

3. Use according to claim 1 or 2, wherein use is made of a layered composite material whose total thickness is in the range from 1 to 20 mm and in which 80% of the total thickness is represented by the backing layer.

## Revendications

1. Utilisation d'une matière composite stratifiée présentant une surface réalisée de manière décorative, qui est composée d'une couche décorative et d'une couche thermodurcie déposée sur la couche décorative, qui sont disposées de chaque côté d'une couche support de matière polymère thermoplastique, en tant que matière de surface pour la construction automobile et l'industrie électronique, **caractérisée en ce que** l'on utilise, en tant que polymère thermoplastique, le polystyrène, un copolymère styrène/acrylonitrile, un copolymère acrylonitrile/butadiène/styrène, le poly(térephtalate de butylène) ou le polyoxyméthylène.

2. Utilisation selon la revendication 1, **caractérisée en ce que** l'on utilise en plus, pour la couche support, une matière de renforcement à raison de 10% à 60% en poids par rapport au poids total du mélange, la matière de renforcement étant composée de sulfate de baryum, d'hydroxyde de magnésium, de talc, de bois, de lin, de craie, de fibres de verre ou de billes de verre.

3. Utilisation selon l'une quelconque des revendications 1 ou 2, **caractérisée en ce que** l'on utilise une matière composite stratifiée qui possède une épaisseur totale allant de 1 mm à 20 mm et dont 80% de l'épaisseur totale sont constitués par la couche support.
